# EUROPEAN PATENT APPLICATION

(11) **EP 4 803 453 A1**
(43) Date of publication of application: **09.09.2026**
(21) Application number: 24885228.7
(22) Date of filing: 18.07.2024
(51) Int. Cl.: B65G 47/14

(54) **COMPONENT FEED DEVICE**

(30) Priority: 02.11.2023 JP 2023188304
(71) Applicant: Astemo, Ltd., Tokyo 100-0004 (JP)
(72) Inventor: HIRAI, Yoshiaki, Hitachinaka-shi, Ibaraki 312-8503 (JP); MORII, Hiroki, Hitachinaka-shi, Ibaraki 312-8503 (JP)
(74) Representative: Grünecker Patent- und Rechtsanwälte PartG mbB
(86) International application number: PCT/JP2024/025735
(87) International publication number: WO 2025/094451

(57) **Abstract**

An alignment mechanism 11 includes an alignment plate 18 disposed on the downstream side of a transport plate 13, an opening hole 21 which is formed at the upstream end portion of the alignment plate, and into which a plate-like protrusion of each spring member, and a slit-shaped guide portion 20a formed to extend continuously in a straight line on a downstream side of the opening hole along a transport direction of the spring members, so as to guide each of the spring members toward the downstream side via the protrusion. The opening hole includes an opening portion 22 having a size configured to allow the protrusion to drop thereinto, and a capture portion having a width gradually narrowing from the opening portion toward the guide portion, so as to slidably guide the protrusion toward the guide portion while imparting a counterclockwise rotational moment to each of the spring members when one side portion 2d of the protrusion comes into contact with one side edge portion 23a. According to the configuration, it is possible to sort a plurality of components by front and back orientation, and align them.

## Description

### TECHNICAL FIELD

The present invention relates a component feed device that automatically separates a plurality of components, such as automotive components, sorts them by front and back orientation, aligns them, and feeds them to the outside.

### BACKGROUND TECHNOLOGY

As is well known, for example, automation has progressed in automobile manufacturing technology, and robots are used for component assembly operations, and productivity has been enhanced by adopting a configuration in which a plurality of components are pre-sorted by front and back orientation for feeding them to the robots.

As a conventional component feed device, for example, the one described in the following patent document 1 is known. The target component for this component feed device includes a main body in the shape of a rectangular block with flat end surfaces and a cylindrical protrusion integrally provided at the center of one end surface of the main body. In the component feed device, a recessed groove through which the protrusion passes is formed in a passage member, and the inner surface of the recessed groove serves as a guide surface for the protrusion, and sliding surfaces on which the end surface of the component main body slides are formed on both sides of the recessed groove. Furthermore, a drop hole for the component is formed at the bottom portion of the recessed groove, and the width dimension of the drop hole is set larger than the height dimension of the component.

In this conventional component feed device, when a component in a normal orientation in which the protrusion faces downward is transported by the transport vibration, the protrusion passes through the space of the recessed groove, and the flat end surface of the main body slides on the sliding surfaces and is fed. At this time, since the protrusion moves while sliding along the guide surfaces formed on the inner side of the recessed groove, the movement of the component in the width direction of the recessed groove is restricted. Consequently, the component does not slip off the passage member and is smoothly transported in the correct posture while being positioned correctly.

### PRIOR ART DOCUMENT(S)

### PATENT DOCUMENT(S)

Patent Document 1: Japanese Patent Application Publication No. 2000-109042 (FIGS. 1 and 2)

### SUMMARY OF THE INVENTION

### PROBLEM TO BE SOLVED BY THE INVENTION

The above-described conventional component feed device employs technology for sorting components based on front and back orientation, and transporting and feeding them. However, the target component is formed of a rectangular block-shaped main body and a cylindrical protrusion provided at the center of one end surface of the main body, as described above, and this device is designed for the component with this specific structure. Consequently, applying this component feed device to components with different structures or shapes is difficult.

The present invention has been made into consideration of such a technical problem, and an object of the present invention is to provide a component feed device capable of sorting at least a plurality of components by front and back orientation and aligning them during their movement, targeting components each of which includes a plate-like protrusion extending at a predetermined angle from the plan surface portion of the main body.

### MEANS FOR SOLVING THE PROBLEM

As one preferable aspect of a component feed device of the present invention, it mainly includes: a transport mechanism having a transport surface on which the plurality of components can be placed and transported; and an alignment mechanism which is disposed on a downstream side of the transport surface, and feeds the components toward a downstream side while aligning them, wherein the alignment mechanism includes: an alignment plate disposed on a downstream side of the transport surface; a recess or a hole which is formed at an upstream end portion of the alignment plate, and into which the protrusion of each of the components fed from the transport surface can drop; and a slit-shaped guide portion formed to extend continuously in a straight line along a transport direction of the components on a downstream side of the recess or the hole, so as to guide each of the components toward a downstream side via the protrusion, and wherein the recess or the hole includes; an opening portion which is formed on a transport surface side, and has a size configured to allow the protrusion to drop thereinto from any rotational position; and a capture portion having a width gradually narrowing from the opening portion toward the guide portion, so as to slidably guide the protrusion toward a direction of the guide portion while imparting a rotational moment in one direction to each of the components when one side portion of the protrusion comes into contact with one of a pair of side edge portions of the capture portion.

### EFFECT OF THE INVENTION

According to a preferred aspect of the present invention, it becomes possible to sort components based on front and back orientation and align them while the components are transported within the component feed device.

### BRIEF DESCRIPTION OF THE DRAWINGS

FIG. 1 is a perspective view of a spring member which is the target component of a component feed device according to the present invention.
FIG. 2(a) is a front view of the spring member, FIG. 2(b) is a right side view of the spring member, and FIG. 2(c) is a rear view of the spring member.
FIG. 3 is a perspective view showing a first embodiment of the component feed device of the present invention.
FIG. 4 is a left side cross-sectional view of the component feed device.
FIG. 5 is a main part plan view showing one opening hole and a guide portion of an alignment plate used to the component feed device.
FIG. 6 is a front view showing a rotating brush of a separation mechanism used to the component feed device.

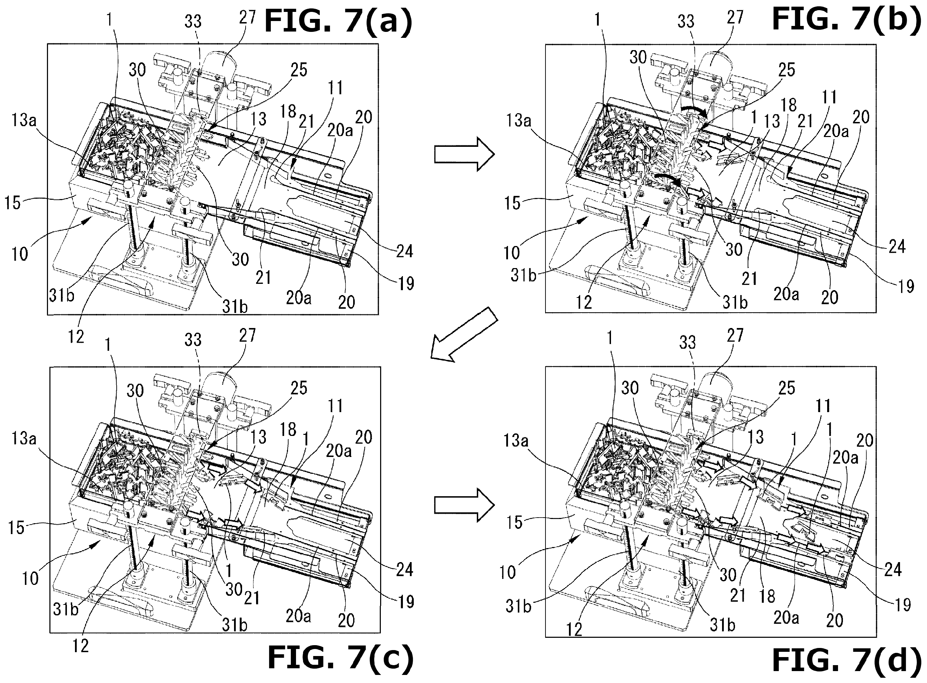

FIG. 7 shows a sequence of operation flow performed by the component feed device of the present embodiment to separate, individualize and sort spring members by front and back orientation, and align them, where (a) is a top view showing a state in which a plurality of spring members are stacked at the entrance of a transport mechanism, (b) is a top view showing a state in which the spring members are separated and individualized by the rotating brush of the separation mechanism, (c) is a top view showing a state in which the separated and individualized spring members are fed to each alignment portion of the alignment mechanism, and (d) is a top view showing a state in which the spring members move while being aligned by the alignment portions.
FIG. 8 is an explanatory diagram of the action of a spring member during movement in the alignment mechanism provided in the present embodiment, where (a) is a plan view showing a state in which a protrusion of the spring member has entered an opening hole in a posture substantially directly facing the opening hole, (b) is a plan view showing a state in which the spring member has rotated counterclockwise via the protrusion within the opening hole.
FIG. 9, similarly, is an explanatory diagram of the action of a spring member in the alignment mechanism, where (a) is a plan view showing a state in which the protrusion of the spring member has entered the opening hole in an inclined posture relative to the opening hole, (b) is a plan view showing a state in which the spring member has rotated clockwise via the protrusion within the opening hole, and (c) is a plan view showing a state in which the protrusion has been guided toward a guide portion while the spring member has rotated further clockwise.
FIG. 10 is a main part plan view showing a second embodiment of the component feed device according to the present invention.
FIG. 11 shows a third embodiment of the component feed device according to the present invention, where (a) is a plan view showing a part of the alignment plate, and (b) is an explanatory diagram showing a state in which the spring member moves from the opening hole of the alignment plate to the guide portion.

### MODE FOR IMPLEMENTING THE INVENTION

In the following, embodiments of a component feed device according to the present invention will be explained in detail based on the drawings.

### [First Embodiment]

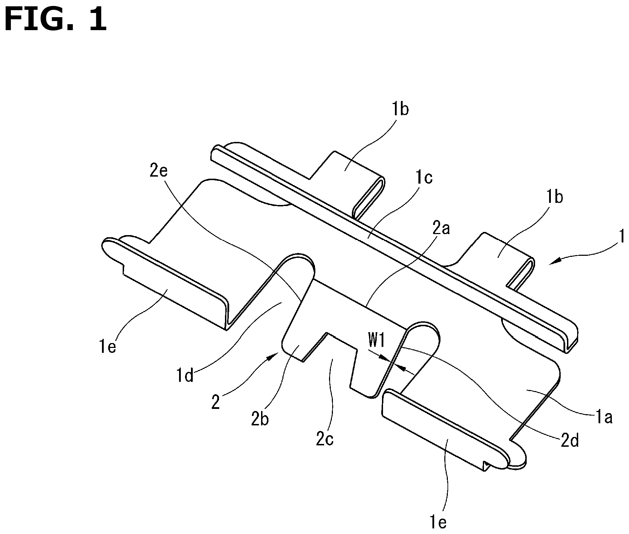

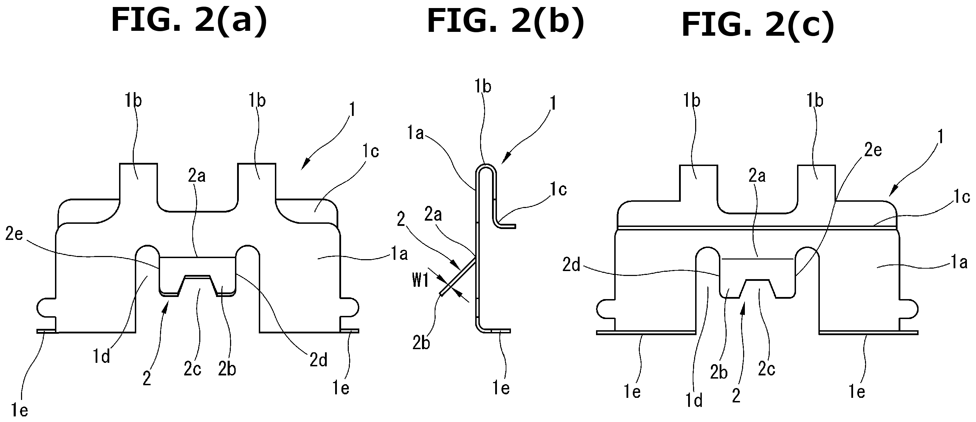

FIG. 1 is a perspective view of a spring member which is the target component of the component feed device according to the present invention. FIG. 2(a) is a front view of the spring member, FIG. 2(b) is a right side view of the spring member, and FIG. 2(c) is a rear view of the spring member.

In the present embodiment, the target component is a spring member that separates a brake component used in an automotive brake system by spring force. This spring member 1, as shown in FIGS. 1 and 2(a) to 2(c), is formed by three-dimensionally complexly bending spring steel plate, and includes a rectangular planar main body 1a, a left-right pair of narrow bending portions 1b and 1b bent in a fold-back manner from one end portion of the main body 1a in the width direction, and a plate portion 1c which is integrally formed at the distal end portions of both the bending portions 1b and 1b, and is bent into a circular arc shape in cross-section.

A rectangular opening portion 1d is cutout in the center portion of the main body 1a in the longitudinal direction, and on both sides of the opening portion 1d, a pair of protruding pieces 1e and 1e are provided which are bent substantially perpendicularly to the main body 1a in the same direction as the plate portion 1c. Furthermore, a rectangular plate-shaped protrusion 2 is integrally formed at the central position of the end edge of the opening portion 1d in the main body 1a, so as to protrude outward at a predetermined angle. Specifically, the protrusion 2 extends outward at an angle of approximately 45° relative to the main body 1a from a base end 2a connected to the main body 1a to a distal end portion 2b of the protrusion 2, and a trapezoidal notch 2c is formed at the distal end edge of the distal end portion 2b.

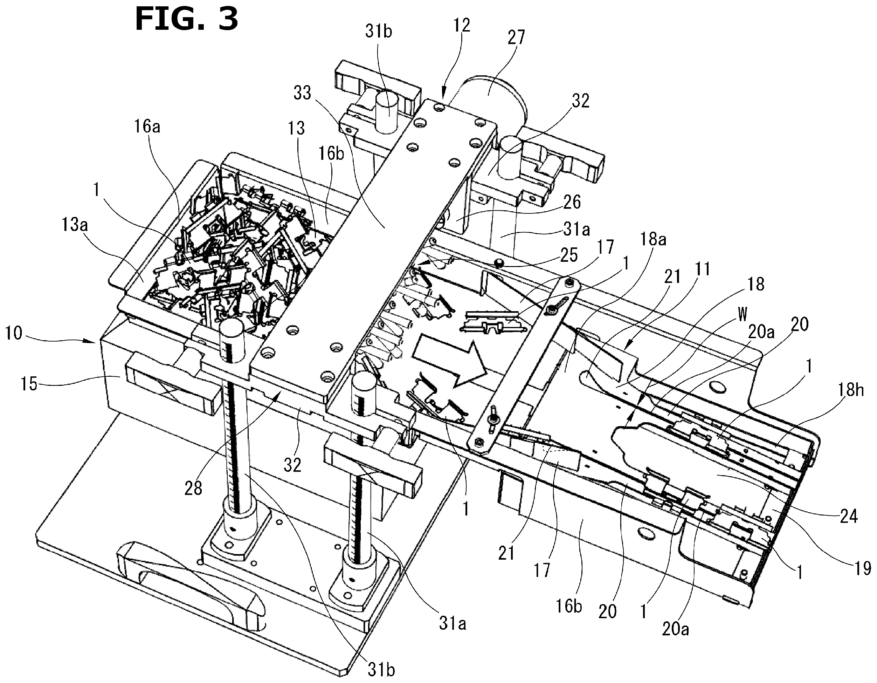

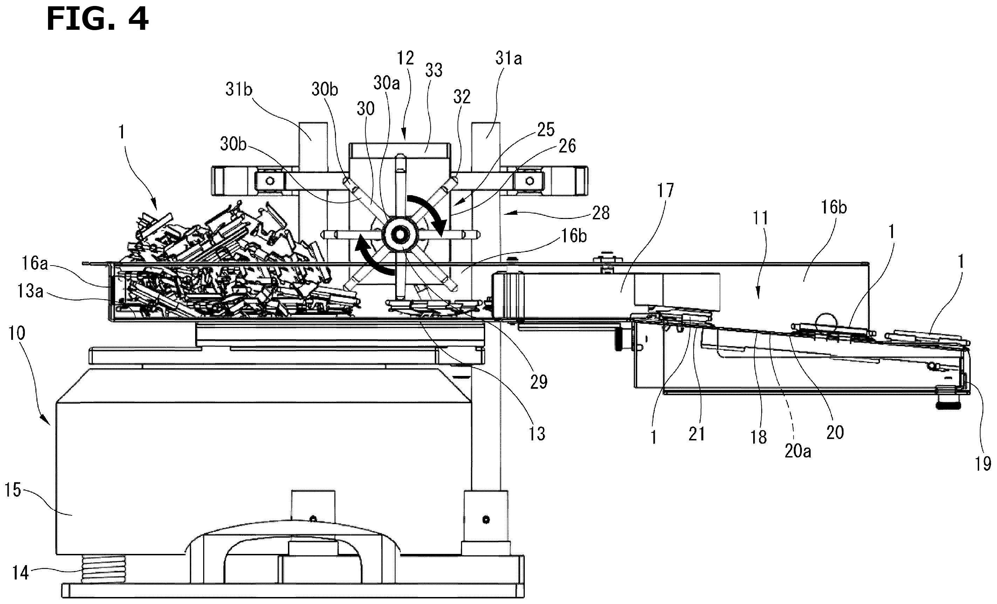

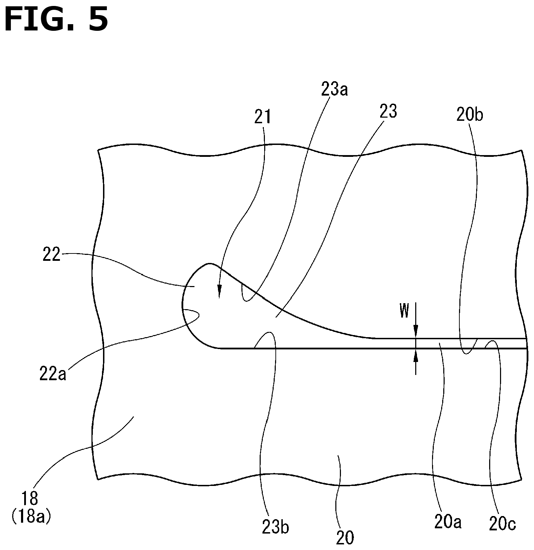

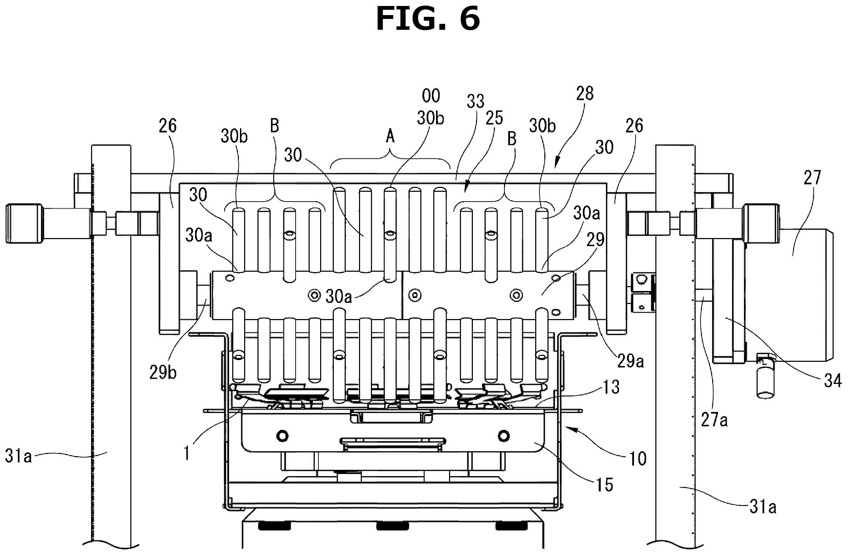

FIG. 3 is a perspective view showing a first embodiment of the component feed device of the present invention, FIG. 4 is a left side sectional view of the component feed device, FIG. 5 is a main part plan view showing an opening hole and a guide portion on one side of an alignment plate which are used to the component feed device, and FIG. 6 is a front view showing a rotating brush of a separation mechanism used to the component feed device.

The component feed device, as shown in FIGS. 3 and 4, includes a transport mechanism 10 that transports downstream a plurality of spring members 1 that have been fed in while loading them thereon, an alignment mechanism 11 disposed on the downstream side of the transport mechanism 10, which feeds the spring members 1 while aligning and sorting them based on front and back orientation, and a separation mechanism 12 for separating and individualizing the spring members 1 transported toward the alignment mechanism 11 which is provided at an intermediate upper position of the transport mechanism 10.

The transport mechanism 10 is configured by a general vibrating conveyor and mainly includes: a transport plate 13 (trough) which is a transport surface that carries and transports the plurality of spring members 1 introduced into an inlet portion 13a; a vibration generator 15 positioned below the transport plate 13, which imparts vibration to each of the spring members 1 in the downstream direction (toward the alignment mechanism 11) that is the moving direction of the spring members 1, via, for example, a spring 14 provided to the transport plate 13; and an electronic control unit (not shown) which controls the vibration generator 15. The transport plate 13 is formed from a steel plate material long in the front-to-back direction. A front end wall 16a and side walls 16b and 16b arranged in a U-shape when viewed in plan are provided at the rear end edge of the rear end portion (inlet portion 13a) and at both left-right side edges of the left and right side portions of the transport plate 13, respectively, to suppress the spring members 1 from falling during transportation. The side walls 16b and 16b extend to the respective sides of the after-mentioned alignment plate 18 of the alignment mechanism 11.

Furthermore, on the upper surface on the downstream side of the transport plate 13, a left-right pair of guide plates 17 and 17 are vertically arranged in a V-shape having a width gradually narrowing toward the alignment plate 18 to collect and guide the plurality of spring members 1 separated by the separating mechanism 12 toward the end portion of the alignment plate 18 of the alignment mechanism 11.

As shown in FIGS. 1 and 2, and 5, the alignment mechanism 11 includes a metal alignment plate 18 disposed continuously with the front end portion of the transport plate 13, and a support frame 19 disposed at the lower distal end of the alignment plate 18 to support it. The alignment plate 18 is disposed with a downward inclined manner from an upstream end portion 18a on the transport plate 13 side to a downstream end 18b at the distal end side thereof. Furthermore, a pair of left and right alignment portions including first and second alignment portions 20 and 20 arranged on parallel lines are formed extending from the front end edge of the upstream end portion 18a to the distal end edge of the downstream end portion 18b.

At the upstream end portion 18a, a left-right pair of opening holes 21 and 21 (recesses or holes) are formed vertically through the plate, into which the protrusions 2 of the spring members 1 fed from the transport mechanism 10 can drop therein. The first and second alignment portions 20 and 20 are formed as elongated plate-like members, and slit-shaped guide portions 20a and 20a are formed at the respective central positions of the first and second alignment portions 20 and 20 in the width direction. Each of the guide portions 20a and 20a is formed to extend continuously, at the upstream portion thereof, from a corresponding one of the after-described capture portions 23 and 23 of the opening holes 21 and 21 so as to be notched in a straight line along the transport direction of the spring members 1, so as to guide the spring members 1 toward the downstream side in a state in which the protrusions 2 are inserted inside. That is, as also shown in FIGS 2 and 5, a width W of each of the guide portions 20a is formed slightly larger than a thickness width W1 of each of the protrusions 2, allowing the protrusions 2 entered into the capture portions 23 to be slidably guided between side edges 20c and 20d of each of the guide portions 20a.

As shown in FIG. 5, each of the opening holes 21 and 21 is formed on the transporting plate 13 side and has an opening portion 22 which has a size that allows a protrusion 2 of a spring member 1 to fall thereinto from any rotational position, and a capture portion 23 having a width gradually narrowing from the opening portion 22 toward a corresponding one of the first and second guide portions 20a and 20a of the first and second alignment portions 20 and 20.

The end portions 22a on the transport plate 13 side of the opening portions 22 each are formed in an elliptical arc surface shape having a size slightly larger than the outer shape of a protrusion 2. In each of the capture portions 23, a pair of side edge portions 23a and 23b are formed such that a spacing therebetween gradually narrows toward a guide portion 20a, and one side edge portion 23a is formed to be inclined at a predetermined angle from one circumferential edge of an opening portion 22 toward a guide portion 20a, and the other side edge portion 23b is formed in a straight line from the other circumferential edge of the opening 22 toward the guide portion 20a.

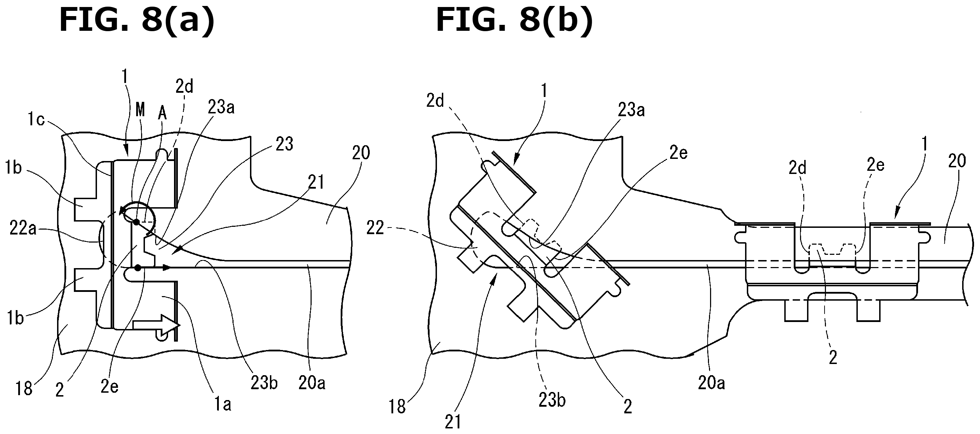

Then, as described later, a spring member 1 moves downstream at various angles from the transport plate 13 to the alignment plate 18. For example, there is case where a protrusion 2 of the spring member 1 falls into the opening portion 22 in the posture shown in FIG. 8(a) described later. In this case, when the one side portion 2d of the protrusion 2 that has fallen into the opening portion 22 comes into contact with the inclined edge portion 23a, the downward flow force imparts a counterclockwise rotational moment M to the protrusion 2, with a point A on the one side edge portion 23a serving as the pivot, as indicated by the arrow in FIG. 8(a). With this, the rotational posture of the protrusion 2 is changed to counterclockwise, as shown in FIG. 8(b), and the protrusion 2 is slidably guided into the guide portion 20a from the other side portion 2e side.

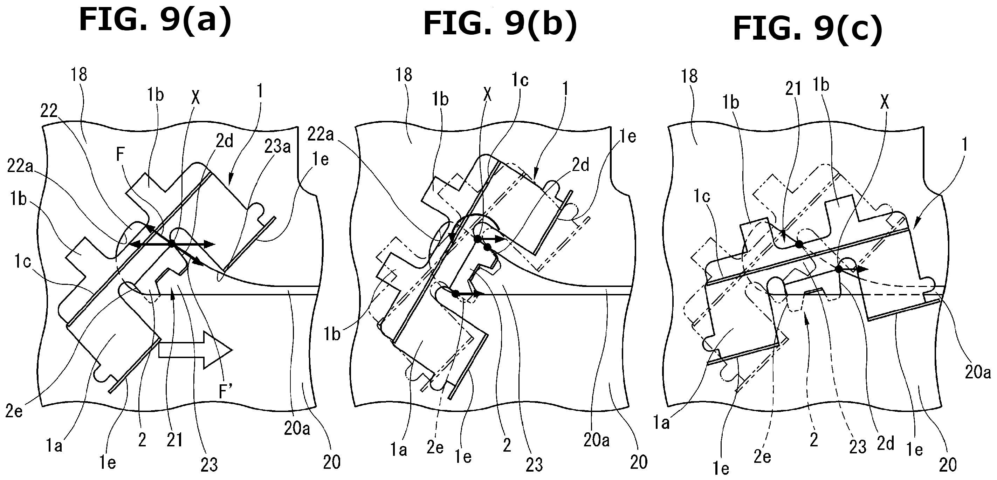

In addition, as shown in FIG. 9(a) described later, there is case where a protrusion 2 of the spring member 1 also falls into the opening portion 22 in an inclined state, for example, in the right direction as illustrated. In this case, when the protrusion 2 falls into the opening portion 22 of the alignment plate 18 and moves toward the capture portion 23, as shown in FIG. 9(a), the one side portion 2d of the inclined protrusion 2 comes into contact with the inclined side edge portion 23a of the capture portion 23, and due to the downstream flow force, a frictional force in the direction of an arrow F and a frictional force in the direction of an arrow F' are generated on the one side edge portion 23a of the protrusion 2. Consequently, as shown in FIG. 9(b) and FIG. 9(c), the protrusion 2 is slidably guided from the one side edge 23a side into the guide portion 20a along the inclined surface of the one side edge portion 23a, while a counterclockwise rotational moment is generated at a point A on the one side edge portion 2d.

Furthermore, as shown in FIG 1, a discharge hole 24 is formed between the first alignment member 20 and the second alignment member 20. The discharge hole 24 is formed as a rectangular elongated hole extending in the front-to-back direction, so as to allow the spring member 1 to fall therein when the plate portion 1c faces downward and the protrusion 2 of the spring member 1 faces upward, and the spring member 1 does not fall into the opening hole 21, namely, when the spring member 1 moves in a state in which the plate portion 1c is positioned on the alignment plate 18. A container box (not shown) is disposed below the discharge hole 24 to accommodate the fallen spring member 1.

In addition, the protrusion 2 of the spring member 1 may fall into the opening portion 22 at various rotational angles. However, in any case, the protrusion 2 moves while being positioned and guided from the opening portion 22 toward the guide portion 20a within the capture portion 23.

As shown in FIGS. 1, 2, and 6, the separation mechanism 12 includes a rotating brush 25 disposed above the substantially center of the transport plate 13 in the longitudinal direction, a pair of bearing portions 26 and 26 rotatably supporting both ends of a rotating shaft 29 of the rotating brush 25, an electric motor 27 which is an actuator rotating and driving the rotating brush 25, and is disposed outside one bearing portion 26, and a support mechanism 28 supporting both the bearing portions 26 and 26 and the electric motor 27.

The rotating brush 25 includes the rotating shaft 29, for example, made of metal or high-hardness resin material, and a plurality of brush portions 30 each having a fixed end portion 30a fixed to the outer circumference of the rotating shaft 29. The rotating shaft 29 has end portions 29a and 29b in the rotational direction which are rotatably supported by the pair of bearing portions 26 and 26 supported by the support plate 33 described later. Furthermore, one end portion 29a of the rotating shaft 29 is connected to a motor shaft 27a of the electric motor 27 via one of the bearing portions 26. The electric motor 27 drives each of the brush portions 30 via the rotating shaft 29 in a rotational direction opposite to the advancement direction of each spring member 1 by the transporting mechanism 10.

Each of the brush portions 30 is made of flexible material, such as resin, and is formed in a thin rod shape. The length from a fixed end portion 30a to a distal end portion 30b of each of the brush portions 30 differs between a central region A in the longitudinal direction of the rotating shaft 29 and both side regions B and B positioned on respective sides of the central region A. Specifically, in the central region A, the length is set such that each of the distal end portions 30b can slide on the transport plate 13, and in the side regions B and B, each of the brush portions 30 is formed shorter than in the region A, such that each of the distal end portions 30b comes into contact with entangled and overlapping spring members 1 on the transport plate 13 at the lower end position, but is set to have a length so as not to reach separated individual spring members 1.

Consequently, when a plurality of entangled spring members 1 are introduced into the inlet portion 13a of the transport plate 13 and move in the direction of the alignment plate 18 (downstream direction), they are temporarily pushed back in the direction toward the inlet portion 13a due to the frictional resistance of the rotating brush 25 rotating in the opposite direction to the movement. With this action, the spring members 1 are separated and individualized, and cannot pass through the central region A but instead pass through the side regions B and B, thereby being distributed to the left and right sides, and moving in the direction of the alignment plate 18.

The support mechanism 28, as shown in FIGS. 1, 2, and 6, includes a pair of support pillar portions 31a and 31b disposed on each of the left and right outer sides of the transport plate 13, and a support plate 33 fixed in a bridging configuration between the upper portions of the support pillar portions 31a and 31b via plate members 32 and 32. The left and right pairs of support pillar portions 31a and 31b are arranged with a predetermined space between them in the front and back direction, and the plate members 32 and 32 are clamped and fixed to the respective upper end portions of the left and right pairs of support pillar portions 31a and 31b. The support plate 33 is formed from an elongated plate with a predetermined width and is disposed above the rotating brush 25 so as to be parallel to the rotating shaft 29, and the end portions thereof in the longitudinal direction are fixed to the respective central upper surfaces of the plate members 32 and 32 using a bolt or the like. The support plate 33 fixedly supports the upper end portions of the respective bearing portions 26 and 26 at the lower portions of both ends thereof, and supports the electric motor 27 via a support piece 34 fixed to the lower part of one end portion thereof.

### [Working Effect of Component Feed Device according to the Present Embodiment]

In the following, a working effect of the component feed device according to the present embodiment will be described below. FIG. 7 shows a sequence of operation flow performed by the component feed device of the present embodiment to separate, individualize and sort spring members 1 based on front and back orientation, and align them, where (a) is a top view showing a state in which a plurality of spring members are stacked at the entrance of the transport mechanism, (b) is a top view showing a state in which the spring members are separated and individualized by the rotating brush of the separation mechanism, (c) is a top view showing a state in which the separated and individualized spring members are fed to the alignment portions of the alignment mechanism, and (d) is a top view showing a state in which the spring members move while being aligned by the alignment portions. FIG. 8 is an explanatory diagram of the action of a spring member during movement in the alignment mechanism, where (a) is a plan view showing a state in which a protrusion of the spring member has entered an opening hole in a posture substantially directly facing the opening hole, (b) is a plan view showing a state in which the spring member has rotated counterclockwise via the protrusion within the opening hole. FIG. 9, similarly, is an explanatory diagram of the action of the spring member in the alignment mechanism, where (a) is a plan view showing a state in which the protrusion of the spring member has entered the opening hole in an inclined posture relative to the opening hole, (b) is a plan view showing a state in which the spring member has rotated clockwise via the protrusion within the opening hole, and (c) is a plan view showing a state in which the protrusion has been guided toward a guide portion while the spring member has rotated further clockwise.

First, as shown in FIG. 7(a), for example, a plurality of spring members 1 are loaded in a stacked state into the inlet portion 13a of the transport plate 13. In this state, the vibrating conveyor of the transport mechanism 10 is driven, and the electric motor 27 of the separation mechanism 12 is driven to rotate the rotating brush 25 in the direction shown by the arrow in FIG. 4. Each of the spring members 1 moves on the transport plate 13 toward the alignment plate 18 (downstream direction) by the vibration of the vibrating conveyor 15, and when reaching the driven rotating brush 25, they are temporarily pushed back toward the inlet portion 13a due to interference and frictional resistance from the distal end portions 30b of the brush portions 30 rotating in the opposite direction to the movement, so as to be separated and individualized.

After that, the individualized spring members 1 cannot pass through the central region A of the rotating brush 25, as shown in FIGS 7(b) and 7(c). Instead, they are distributed to the left and right sides in the regions B and B, passing through these regions B and B while moving toward the alignment plate 18.

Each of the spring members 1 that has moved toward the alignment plate 18 moves downstream in a mixed orientation, as shown in FIG. 7(d), and those with the plate portions 1c facing downward and the protrusions 2 facing upward fall through the discharge hole 24 and are accommodated in the container box. The spring members 1 accommodated in the container box are then re-fed onto the transport plate 13 of the transport mechanism 10.

The spring members 1 with the plate portions 1c facing upward and the protrusions 2 facing downward move toward the capture portion 23, while the protrusions 2 fall into an opening portion 22 of the alignment plate 18 during moving downstream. At this time, as described before, the spring members 1 move downstream from the transport plate 13 to the alignment plate 18 at various angles. As one example thereof, as shown in FIG. 8(a), there is case where the entire spring member 1, including the protrusion 2, moves in a state perpendicular to the opening portion 22, namely, in a posture directly facing the opening portion 22, and then the protrusion 2 is dropped into the opening portion 22 from a direction perpendicular to the opening portion 22. In this case, when one side portion 2d of the protrusion 2 of the spring member 1 comes into contact with the inclined side edge portion 23a, and the downward flow force imparts a counterclockwise rotational moment M to the protrusion 2, with a point A on the one side edge portion 23a serving as the pivot, as indicated by the arrow in FIG. 8(a). With this, as shown in FIG. 8(b), the protrusion 2 is slidably guided into the guide portion 20a from the other side portion 2e side, while the entire spring member 1 rotates counterclockwise. Subsequently, the spring member 1 is guided to move downstream in an aligned state while sliding through the guide portion 20a via the protrusion 2 and is stopped and held at the most downstream position.

Furthermore, as shown in FIG. 9(a), there is case where the protrusion 2 falls into the opening portion 22 in a state in which the entire spring member 1 is inclined, for example, in the right direction of FIG. 9(a) relative to the opening hole 21. In this case, when the protrusion 2 falls into the opening portion 22 of the alignment plate 18 and moves toward the capture portion 23, an X point of one side portion 2d of the inclined protrusion 2 comes into contact with the inclined one side edge portion 23a of the capture portion 23, and due to the downstream flow force, a frictional force in the direction of an arrow F and a frictional force in the direction of an arrow F' are generated on the one side portion 2d and the one side edge portion 23a of the protrusion 2.

With this, as shown in FIGS. 9(b) and 9(c), the protrusion 2 moves in the direction of the guide portion 20a (indicated by the arrow) along the inclined surface of the one side edge portion 23a, while the one side portion 2d slides along the inclined surface of the one side edge portion 23a and a clockwise rotational moment is applied. Consequently, while the entire spring member 1, including the protrusion 2, rotates clockwise, the protrusion 2 slidably guided into the guide portion 20a from the one side portion 2d side. After that, the spring member 1 is guided in a downstream direction in an aligned state while sliding along the guide portion 20a via the protrusion 2, and is stopped and held at the most downstream position.

In this way, spring members 1 separated and individualized by the rotating brush 25 are sorted based on front and back orientation via the protrusions 2 at the opening portions 21 of the alignment portions 20 on the alignment plate 18, and then are guided downstream while sliding within the guide portions 20a, and are stopped and held at the most downstream position. Consequently, since each of the spring members 1 is sorted based front and back orientation while being placed in an aligned state through the above-mentioned series of processes, automatic assembly by a robot in subsequent processes becomes possible.

In particular, in the present embodiment, it is possible to perform automatic individualization of spring members 1 by the separation, sort them by front and back orientation, and align them. It is therefore possible to improve the efficiency of robotic assembly operations and reduce manufacturing costs.

Furthermore, in the present embodiment, the angle relative to the transport direction of a spring member 1 can be changed at one side edge portion 23a of a capture portion 23 of the alignment mechanism 11. That is, with a simple structure of the capture portion 23, while imparting a rotational moment to the protruding portion 2, the spring member 1 can be guided toward a guide portion 20a, thereby facilitating manufacturing operations and reducing costs.

Furthermore, since the other side edge portion 23b of the capture portion 23 is connected linearly to the guide portion 20a, the other side portion 2e of the protrusion 2 of a spring member 1 is guided by the other side edge portion 23b and can easily enter the guide portion 20a.

Furthermore, by forming the end portion shape on the transport surface side of the opening portion 22 into an elliptical arc surface which is slightly larger than the outer shape of the protrusion 2 of the spring member 1, without making it excessively large, only the protrusion 2 of the spring member 1 is allowed to drop into the opening portion 22 after moving from the upper surface of the transport plate 13 to the opening portion 22, thereby suppressing the main body 1a or a claw attached to the main body 1a from catching on the peripheral edge of the opening portion 22.

### [Second Embodiment]

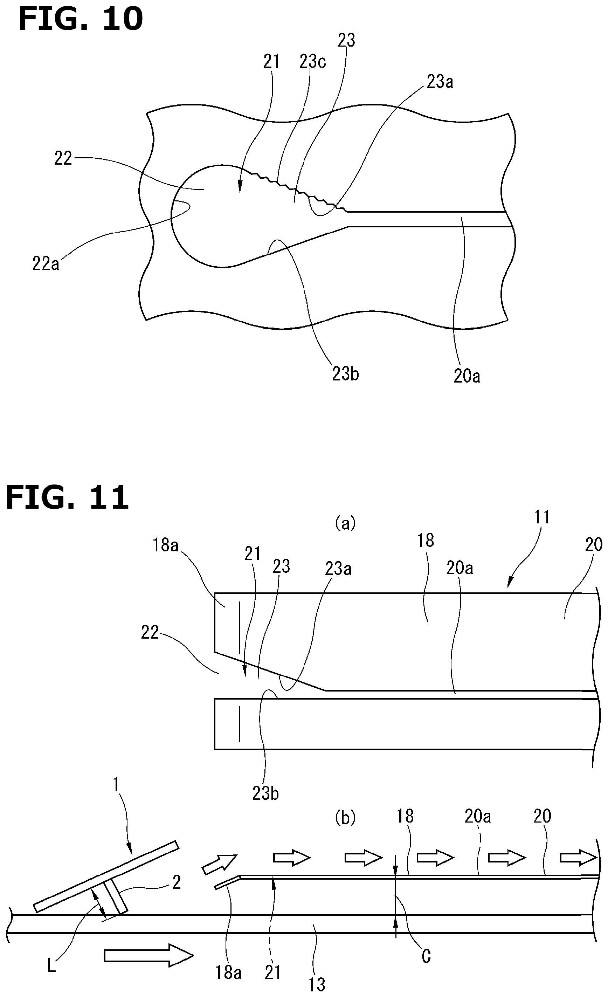

FIG. 10 shows a second embodiment of the present invention, in which the shape of the opening hole 21 is modified and the frictional resistances between the protrusion 2 and each of the side edge portions 23a and 23b of the capture portion 23 are made different.

Specifically, the entire opening hole 21 is formed in a substantially raindrop shape, and the opening hole 22 is formed in a semicircular arc shape, and both side edge portions 23a and 23b of the capture portion 23 are formed in a tapered inclined shape from the opening portion 22 toward the guide portion 20a. Furthermore, the capture portion 23 is formed with a friction-generating portion 23c having a rough surface at the end edge of one side edge portion 23a, while the end edge of the other side edge portion 23b is formed smooth and flat.

Therefore, in the second embodiment, by providing a difference in frictional resistance between the friction-generating portion 23c on one side edge portion 23a of the capture portion 23 and the other side edge portion 23b, it becomes possible to actively impart a rotational moment to the protrusion 2 of the spring member 1 that has moved to the capture portion 23. Consequently, imparting rotational torque to the protrusion 2 can be achieved through the simple structure of the opening hole 21, thereby improving manufacturability and reducing costs.

Furthermore, since the other configurations are the same as in the first embodiment, the same effect as the first embodiment can be obtained.

### [Third Embodiment]

FIG. 11 shows a third embodiment of the present invention, where (a) is a plan view of an alignment plate, and (b) is a side view showing a state in which a spring member moves into an opening hole and a guide portion of the alignment plate. In this embodiment, the structure of the alignment plate 18 of the alignment mechanism 11 is modified.

Specifically, as shown in FIGS. 11(a) and 11(b), the alignment plate 18 of the alignment mechanism 11 is disposed at an upper position on the downstream side of the transport plate 13, which is extended downstream, with a predetermined gap C. Furthermore, the opening hole 21 is formed in a V-shape. An upstream end portion 18a of the alignment plate 18 at which an opening portion 22 of the opening hole 21 is formed is formed in an upwardly inclined shape. The end portion of the opening portion 22 of the opening hole 21 is open, and one side edge portion 23a of the capture portion 23 is formed in a shape inclined toward the guide portion 20a, while the other side edge portion 23b is formed in a straight line shape continuous with the guide portion 20a. The gap C is formed slightly larger than a protrusion length L of the protrusion 2 of the spring member 1, so as to be set to a length where the distal end edge of the protrusion 2 does not come into contact with the upper surface of the transport plate 13 during movement of the spring member 1.

Therefore, in the spring members 1 separated and individualized by the rotating brush 25 of the separation mechanism 12 and moved in the downstream direction, as indicated by the arrow in FIG. 11(b), those with the protrusions 2 facing downward enter the opening portion 22 of the opening hole 21. Subsequently, similar to the first embodiment, a rotational moment is applied to the protrusion 2 by one side edge portion 23a of the capture portion 23, and the spring member 1 as a whole rotates while the protrusion 2 is guided downstream by the guide portion 20a. Consequently, each of the spring members 1 moves in an aligned state while being sorted by front and back orientation and is held at the most downstream position. Thus, in the third embodiment, the same working effect as the first embodiment can also be obtained.

The present invention is not limited to the configurations of the above-described embodiments, and for example, it is applicable not only to the spring member but also to any target component having a protrusion protruding from a flat main body.

Furthermore, for the transport mechanism 10, in addition to the vibrating conveyor 15, for example, a belt conveyor may also be applicable. Additionally, in the alignment mechanism 11, the number of alignment portions 20 or guide portions 20a on the alignment plate 18 may be further increased. Moreover, the shape or material of each brush portion 30 of the rotating brush 25 in the separation mechanism 12 may also be changed. In addition, in the present embodiments, the recess or hole is an opening hole 21, but it may also be an opening groove.

### Explanation of Symbols

1...Spring member, 1a...Main body, 1c...Plate portion, 2...Protruding, 2d...One side portion, 2e...Other side portion, 10...Transport mechanism, 11...Alignment mechanism, 12...Separation mechanism, 13...Transport plate (transport surface), 18...Alignment plate, 18a...Upstream end portion, 18b...Downstream end portion, 20...Alignment portion, 20a...Guide portion, 21...Opening hole (recess or hole), 22...Opening portion, 23...Capture portion, 23a... One side edge portion, 23b...Other side edge portion, 24...Discharge hole, 25...Rotating brush, 26...Bearing portion, 27...Electric motor, 29...Rotating shaft, 30...Brush portion, 30a...Fixed end portion, 30b...Distal end portion, 31a, 31b...Support pillar portions, 33...Support plate.

## Claims

1. A component feed device for separating and feeding a plurality of components each having a main body with a planar portion and a plate-like protrusion extending from the planar portion of the main body at a predetermined angle, comprising:
a transport mechanism having a transport surface on which the plurality of components can be placed and transported; and
an alignment mechanism which is disposed on a downstream side of the transport surface, and feeds the components toward a downstream side while aligning them,
wherein the alignment mechanism includes:
an alignment plate disposed on a downstream side of the transport surface;
a recess or a hole which is formed at an upstream end portion of the alignment plate, and into which the protrusion of each of the components fed from the transport surface can drop; and
a slit-shaped guide portion formed to extend continuously in a straight line along a transport direction of the components on a downstream side of the recess or the hole, so as to guide each of the components toward a downstream side via the protrusion, and
wherein the recess or the hole includes;
an opening portion which is formed on a transport surface side, and has a size configured to allow the protrusion to drop thereinto from any rotational position; and
a capture portion having a width gradually narrowing from the opening portion toward the guide portion, so as to slidably guide the protrusion toward a direction of the guide portion while imparting a rotational moment in one direction to each of the components when one side portion of the protrusion comes into contact with one of a pair of side edge portions of the capture portion.

2. The component feed device according to claim 1,
wherein the pair of side edge portions formed such that a spacing therebetween gradually narrowing toward the guide portion of the capture portion are oriented at different angles relative to the guide portion.

3. The component feed device according to claim 2,
wherein the one of the pair of side edge portions is connected to the guide portion at a predetermined inclined angle relative to the guide portion, and
wherein an other of the pair of side edge portions is connected to the guide portion so as to extend in a straight line.

4. The component feed device according to claim 2,
wherein the capture portion is configured to impart the rotational moment to the protrusion in one direction by providing a difference in frictional resistance between the one of the pair of side edge portions and an other of the pair of side edge portions.

5. The component feed device according to claim 2,
wherein an end portion on the transport plate side of the opening portion of the capture portion is formed in an elliptical arc surface shape having a size slightly larger than an outer shape of the protrusion.

6. The component feed device according to claim 1,
wherein the transport surface is a part of a vibrating conveyor.

7. The component feed device according to claim 1,
wherein the transport surface is a part of a belt conveyor.

8. The component feed device according to claim 1,
wherein the alignment plate has a pair of alignment portions including a left alignment portion and a right alignment portion arranged on parallel lines on a downstream side thereof, and a discharge hole formed between the alignment portions for dropping the components transported downstream without the protrusion of each of the components dropping into the opening portion, and
wherein a separation mechanism is provided at an upper position of the transport surface for distributing the plurality of components to left and right sides so as to correspond to the alignment portions by a rotating brush, and separating and individualizing them.

9. The component feed device according to claim 8,
wherein the rotating brush includes a rotating shaft driven and rotated by an actuator, and a plurality of brush portions provided on an outer circumference of the rotating shaft,
wherein, in a central region in a longitudinal direction of the rotating shaft, each of the brush portions is configured to have a length to allow the brush portions to slide on the transport surface so as to restrict passage of the components, and, in both end regions in the longitudinal direction, each of the brush portions is configured to have a length to allow the components to pass therethrough.
